# EUROPEAN PATENT APPLICATION

(11) **EP 4 583 350 A1**
(43) Date of publication of application: **09.07.2025**
(21) Application number: 24851092.7
(22) Date of filing: 08.08.2024
(51) Int. Cl.: H02J 3/36

(54) **OFFSHORE WIND POWER DIRECT CURRENT TRANSMISSION TOPOLOGY CIRCUIT AND SYSTEM BASED ON SERIES-PARALLEL CONVERTERS**

(30) Priority: 10.08.2023 CN 202311002637
(71) Applicant: China Three Gorges Corporation Industrial Development (Beijing) Co., Ltd., Beijing 101199 (CN); China Three Gorges Corporation, Wuhan, Hubei 430010 (CN)
(72) Inventor: ZHOU, Xingda, Beijing 101199 (CN); TANG, Bojin, Beijing 101199 (CN); WANG, Yifan, Beijing 101199 (CN); GOU, Lifeng, Beijing 101199 (CN); JIA, Na, Beijing 101199 (CN); WU, Qiren, Beijing 101199 (CN); GUO, Mingzhu, Beijing 101199 (CN); LV, Pengyuan, Beijing 101199 (CN); WANG, Wubin, Beijing 101199 (CN); YANG, Benjun, Beijing 101199 (CN); WANG, Jinshi, Beijing 101199 (CN); QI, Shaobing, Beijing 101199 (CN)
(74) Representative: Bryn Aarflot AS
(86) International application number: PCT/CN2024/110643
(87) International publication number: WO 2025/031447

(57) **Abstract**

The present application provides an offshore wind power direct-current transmission topological circuit and system based on series-parallel converter valve, wherein the topological circuit comprises an offshore wind farm, an offshore converter valve, a direct-current undersea cable, an onshore converter valve, an onshore transformer and an onshore power grid; the topological circuit provided by the present application reduces the volume and cost of the offshore converter valve by improving the structure of the offshore converter valve. The improved offshore converter valve includes three groups of diode valves and a group of offshore auxiliary MMC, wherein the direct-current sides of the three groups of diode valves are connected in series, and the offshore auxiliary MMC is connected in parallel with the direct-current side of one of the diode valves, which effectively reduces the cost of the offshore converter valve; during the starting process of the system provided by the present application, the first bypass switch and the second bypass switch are controlled to be closed by the control apparatus, and the onshore converter valve realizes the onshore energy reverse delivery through the first bypass switch and the second bypass switch, thereby completing the black start of the offshore wind farm.

## Description

The present application claims the priority of the Chinese patent application filed to Chinese National Intellectual Property Administration (CNIPA) on August 10th, 2023, with the application number of 202311002637.X and the invention name of "OFFSHORE WIND POWER DIRECT-CURRENT TRANSMISSION TOPOLOGICAL CIRCUIT AND SYSTEM BASED ON SERIES-PARALLEL CONVERTER VALVE", the entire contents of which are incorporated herein by reference.

### TECHNICAL FIELD

The present application relates to the technical field of offshore wind power, in particular relates to an offshore wind power direct-current transmission topological circuit and system based on series-parallel converter valve.

### BACKGROUND

High-voltage direct-current (HVDC) power transmission technology is generally adopted in long-distance offshore wind power transmission. After the power generated by offshore wind turbines is collected by an alternating-current cable, an offshore converter valve converts alternating-current power into direct-current power, and then transmits the power to an onshore converter station through a direct-current undersea cable. At present, modular multilevel converter (MMC), which contains a plurality of half-bridge sub-modules, is adopted in converter valves of offshore converter valves in offshore wind power direct-current power transmission projects. However, MMC converter has high cost, large volume and weight, and high investment cost.

In order to realize lightweight of offshore converter valve and converter station platform and reduce the cost of offshore wind power transmission system, at present, the sending terminal of offshore wind power direct-current transmission system mostly adopts various centralized transmission topologies and networking schemes such as unidirectional current type uncontrolled rectifier converter based on diode elements. It is helpful for realizing lightweight of offshore platform to adopt unidirectional current type uncontrolled rectifier converter based on diode elements at the sending terminal, but the existing scheme has the disadvantage that the offshore wind farm is unable to black start.

### SUMMARY OF THE INVENTION

Therefore, the technical scheme of the present application mainly solves the problem of defects of large volume and high cost of the existing offshore converter valve, so as to provide an offshore wind power direct-current transmission topological circuit and system based on series-parallel converter valve.

In a first aspect, the embodiments of the present application provide an offshore wind power direct-current transmission topological circuit based on series-parallel converter valve, which comprises: an offshore wind farm, an offshore converter valve, a direct-current undersea cable, an onshore converter valve, an onshore transformer and an onshore power grid;
the offshore converter valve is connected with the offshore wind farm through an offshore confluence bus and the offshore converter valve is connected with the onshore converter valve through the direct-current undersea cable; the onshore converter valve is connected with the onshore power grid through the onshore transformer;
the offshore converter valve comprises an offshore auxiliary modular multilevel converter valve, a first diode valve, a second diode valve and a third diode valve, wherein a direct-current side of the offshore auxiliary modular multilevel converter valve is connected in parallel with the second diode valve, an alternating-current side of the offshore auxiliary modular multilevel converter valve is connected to the offshore confluence bus through a coupling transformer, and direct-current sides of the first diode valve, the second diode valve and the third diode valve are connected in series, an alternating-current side of the first diode valve is connected to the offshore confluence bus through a first three-winding transformer, an alternating-current side of the second diode valve is connected to the offshore confluence bus through a second three-winding transformer, an alternating-current side of the third diode valve is connected to the offshore confluence bus through a third three-winding transformer, a direct-current positive pole of the first diode valve is connected to the direct-current undersea cable through a first circuit breaker, and a side of the first circuit breaker adjacent to the undersea cable is connected to a negative pole of the first diode valve through a first bypass switch, a direct-current negative pole of the third diode valve is connected to the direct-current undersea cable through a second circuit breaker, and a side of the second circuit break adjacent to the undersea cable is connected to a positive pole of the third diode valve through a second bypass switch.

In the offshore wind power direct-current transmission topological circuit based on series-parallel converter valve provided by the embodiment of the present application, in consideration of that the existing offshore converter valve adopts a modular multilevel converter valve containing a plurality of half-bridge sub-modules, which leads to large volume and high cost of the offshore converter valve, the present application improves the structure of the offshore converter valve, and the improved offshore converter valve includes three groups of diode valves and a group of offshore auxiliary MMC, wherein the direct-current sides of the three groups of diode valves are connected in series, and the offshore auxiliary MMC is connected in parallel with the direct-current side of one of the diode valves, which effectively reduces the volume and cost of the offshore converter valve.

In a second aspect, the embodiments of the present application provide an offshore wind power direct-current transmission system based on series-parallel converter valve, which comprises: the aforementioned offshore wind power direct-current transmission topological circuit based on series-parallel converter valve and a control apparatus, wherein the control apparatus is connected with the topological circuit;
the control apparatus is configured to send closing instructions to the first bypass switch and the second bypass switch, acquire an onshore charging voltage of the onshore converter valve and an offshore charging voltage of the offshore converter valve after detecting that the first bypass switch and the second bypass switch have been closed, and send an unlocking power-supplying instruction to the offshore converter valve based on the onshore charging voltage and the offshore charging voltage; wherein the onshore charging voltage and the offshore charging voltage are generated by charging the onshore converter valve and the offshore converter valve with a first working voltage output by the onshore power grid through the onshore transformer;
the offshore converter valve is configured to receive the unlocking power-supplying instruction and supply power to wind turbines in the offshore wind farm based on the unlocking power-supplying instruction;
the control apparatus is further configured to detect the current flowing through the first bypass switch and the current flowing through the second bypass switch when a preset number of wind turbines have been started, and send opening instructions to the first bypass switch and the second bypass switch respectively and send closing instructions to the first circuit breaker and the second circuit breaker respectively when the current flowing through the first bypass switch and the current flowing through the second bypass switch are both zero.

The offshore wind power direct-current transmission system based on series-parallel converter valve provided by the embodiments of the present application reduces the volume and cost of the offshore converter valve by improving the structure of the offshore converter valve. The improved offshore converter valve includes three groups of diode valves and a group of offshore auxiliary MMC, wherein the direct-current sides of three groups of diodes are connected in series, and the offshore auxiliary MMC is connected in parallel with the direct-current side of one of the diode valves. During a starting process of the system, the onshore converter valve realizes the onshore energy reverse delivery through the first bypass switch and the second bypass switch, thereby completing the black start of the offshore wind farm.

Combined with the second aspect, in one possible implementation, the offshore converter valve further comprises a third circuit breaker, a fourth circuit breaker, a fifth circuit breaker, a sixth circuit breaker and a seventh circuit breaker;
wherein, the alternating-current side of the offshore auxiliary modular multilevel convert valve is connected to the offshore confluence bus through the third circuit break, the coupling transformer and the fourth circuit breaker in sequence, the alternating-current side of the first diode valve is connected to the offshore confluence bus through the first three-winding transform and the fifth circuit breaker in sequence, the alternating-current side of the second diode valve is connected to the offshore confluence bus through the second three-winding transformer and the sixth circuit breaker in sequence, and the alternating-current side of the third diode valve is connected to the offshore confluence bus through the third three-winding transformer and the seventh circuit breaker in sequence;
the control apparatus is further configured to send closing instructions to the third circuit breaker, the fourth circuit breaker, the fifth circuit breaker, the sixth circuit breaker and the seventh circuit breaker respectively when detecting that the offshore converter valve has been unlocked, so that the third circuit breaker, the fourth circuit breaker, the fifth circuit breaker, the sixth circuit breaker and the seventh circuit breaker are closed.

Combined with the second aspect, in one possible implementation, when the third circuit breaker, the fourth circuit breaker, the fifth circuit breaker, the sixth circuit breaker and the seventh circuit breaker have been closed, the offshore converter valve is further configured to establish a preset voltage on the offshore confluence bus by starting voltage-boosting from zero, the preset voltage is lower than a rated voltage of the offshore confluence bus, and the preset voltage makes the first diode valve, the second diode valve and the third diode valve not conductive, and the preset voltage is higher than a preset grid-connected voltage threshold for offshore wind turbines.

Combined with the second aspect, in another possible implementation, the onshore transformer comprises a starting transformer, a valve side of the starting transformer is connected to the onshore converter valve through an eighth circuit breaker, and a grid side of the starting transformer is connected to the onshore power grid through a ninth circuit breaker;
the control apparatus is further configured to send control instructions to the eighth circuit breaker and the ninth circuit breaker respectively, and the control instructions are configured to control the eighth circuit breaker and the ninth circuit breaker to close, wherein after the eighth circuit breaker and the ninth circuit breaker are closed, the onshore power grid outputs the first working voltage through the starting transformer, so as to charge the onshore converter valve and the offshore converter valve.

Combined with the second aspect, in another possible implementation, the onshore transformer further comprises a steady-state operation transformer, a valve side of the steady-state operation transformer is connected to the onshore converter valve through a tenth circuit breaker, and a grid side of the steady-state operation transformer is connected to the onshore power grid through an eleventh circuit breaker;
the control apparatus is further configured to send opening instructions to the eighth circuit breaker and the ninth circuit breaker respectively and send closing instructions to the tenth circuit breaker and the eleventh circuit breaker when detecting that the first bypass switch and the second bypass switch have been opened; wherein, after the tenth circuit breaker and the eleventh circuit breaker are closed, the onshore power grid outputs a second working voltage through the steady-state operation transformer, so as to charge the onshore converter valve.

Combined with the second aspect, in another possible implementation, the control apparatus is further configured to detect the onshore charging voltage of the onshore converter valve and the offshore charging voltage of the offshore converter valve in real time, and send the unlocking power-supplying instruction to the offshore converter valve when the onshore charging voltage reaches a first voltage threshold and the offshore charging voltage reaches a second voltage threshold.

Combined with the second aspect, in another possible implementation, the control apparatus is further configured to send an uncontrolled-charging instruction to the onshore converter valve when closed states of the eighth circuit breaker and the ninth circuit breaker are acquired, and obtain a direct-current-side capacitor voltage of the onshore converter valve for sending a controlled-charging instruction to the onshore converter valve based on the capacitor voltage.

Combined with the second aspect, in another possible implementation, the control apparatus is further configured to acquire a rated voltage value of the offshore confluence bus, an alternating-current-side voltage reference value of the offshore converter valve and a current value of the connecting line between the direct-current side of the offshore auxiliary modular multilevel converter valve and the second diode valve when detecting that the first circuit breaker and the second circuit breaker have been closed, and input the rated voltage value of the offshore confluence bus, the alternating-current-side voltage reference value of the offshore converter valve and the current value of the connecting line between the direct-current side of the offshore auxiliary modular multilevel converter valve and the second diode valve into a pre-built voltage control model to obtain a voltage adjustment value for the alternating-current side of the offshore converter valve, and send the voltage adjustment value to the offshore converter valve for the offshore converter valve to adjust its alternating-current-side voltage.

**In** a third aspect, the embodiments of the present application further provide a starting method for an offshore wind power direct-current transmission system based on series-parallel converter valve, the method is applied by the aforementioned offshore wind power direct-current transmission system based on series-parallel converter valve, and the method comprises: sending closing instructions to the first bypass switch and the second bypass switch; acquiring an onshore charging voltage of the onshore converter valve and an offshore charging voltage of the offshore converter valve after detecting that the first bypass switch and the second bypass switch have been closed, and sending an unlocking power-supplying instruction to the offshore converter valve based on the onshore charging voltage and the offshore charging voltage; wherein the onshore charging voltage and the offshore charging voltage are generated by charging the onshore converter valve and the offshore converter valve with a first working voltage output by the onshore power grid through the onshore transformer; when a preset number of wind turbines have been started, sending a no-load operation instruction to the offshore auxiliary modular multilevel converter valve, and sending opening instructions to the first bypass switch and the second bypass switch respectively and sending closing instructions to the first circuit breaker and the second circuit breaker respectively.

**In** a fourth aspect, the embodiments of the present application further provide a starting apparatus for an offshore wind power direct-current transmission system based on series-parallel converter valve, the apparatus is used by the aforementioned offshore wind power direct-current transmission system based on series-parallel converter valve, and the apparatus comprises: a first sending module, configured to send closing instructions to the first bypass switch and the second bypass switch; an acquisition module, configured to acquire an onshore charging voltage of the onshore converter valve and an offshore charging voltage of the offshore converter valve after detecting that the first bypass switch and the second bypass switch have been closed, and send an unlocking power-supplying instruction to the offshore converter valve based on the onshore charging voltage and the offshore charging voltage; wherein the onshore charging voltage and the offshore charging voltage are generated by charging the onshore converter valve and the offshore converter valve with a first working voltage output by the onshore power grid through the onshore transformer; a second sending module, configured to, when a preset number of wind turbines have been started, send a no-load operation instruction to the offshore auxiliary modular multilevel converter valve, and send opening instructions to the first bypass switch and the second bypass switch respectively and send closing instructions to the first circuit breaker and the second circuit breaker respectively.

### BRIEF DESCRIPTION OF THE DRAWINGS

In order to explain the technical solutions in the specific embodiments of the present application or in the prior art more clearly, the drawings that are needed in the description of the specific embodiments or the prior art will be briefly introduced below. Apparently, the drawings described below only represent some embodiments of the present application. For those of ordinary skill in the art, other drawings can be obtained according to these drawings without expenditure of creative work.
Figure 1 is a circuit diagram of an offshore wind power direct-current transmission topological circuit based on series-parallel converter valve provided by the embodiments of the present application;
Figure 2 is a schematic diagram of the control strategy of a specific example of an offshore wind power direct-current transmission system based on series-parallel converter valve provided by the embodiments of the present application;
Figure 3 is a flowchart of a starting method for an offshore wind power direct-current transmission system based on series-parallel converter valve provided by the embodiments of the present application;
Figure 4 is a schematic block diagram of a starting apparatus for an offshore wind power direct-current transmission system based on series-parallel converter valve provided by the embodiments of the present application;
Figure 5 is a schematic diagram of a specific example of an electronic device in the embodiments of the present application.

### DETAILED DESCRIPTION OF SPECIFIC EMBODIMENTS

The technical scheme of the present application will be described below clearly and completely with reference to the attached drawings. Apparently, the described embodiments only represent part of embodiments of the present application, not all embodiments of the present application. Based on the embodiments described in the present application, all other embodiments obtainable by those of ordinary skill in the art without expenditure of creative work belong to the protection scope of the present application.

In the description of the present application, it should be noted that the terms "first", "second" and "third" are only used for descriptive purposes and cannot be understood as indicating or implying relative importance. In addition, unless otherwise specifically defined or limited, the terms "installation", "interconnection" and "connection" should be broadly understood, for example, they can be fixed connection, mechanical connection or can be electrical connection; or they can be directly connected, can be indirectly connected through an intermediate medium, or can be internal communication between two elements, can be wirelessly connection or can be wired connection. For those of ordinary skill in the art, the specific meanings of the above terms in the present application can be understood according to specific circumstances.

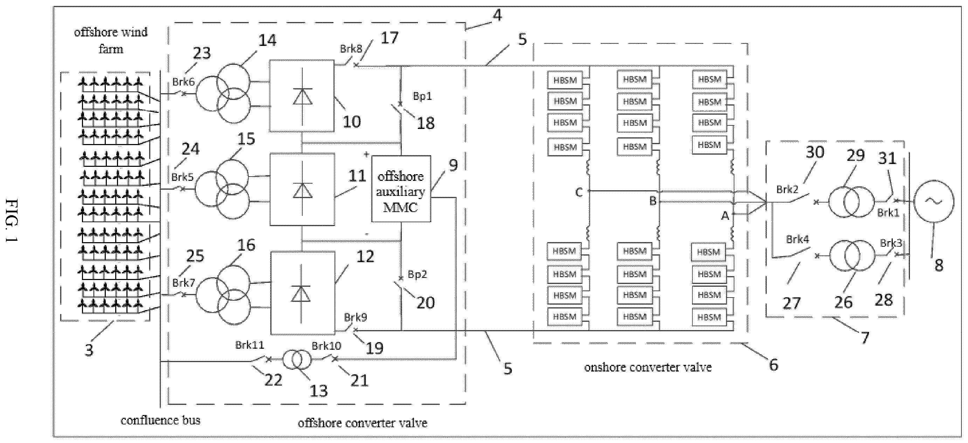

The embodiments of the present application provide an offshore wind power direct-current transmission topological circuit based on series-parallel converter valve, as shown in Figure 1, the topological circuit comprises: an offshore wind farm 3, an offshore converter valve 4, a direct-current undersea cable 5, an onshore converter valve 6, an onshore transformer 7 and an onshore power grid 8;

The offshore converter valve 4 is connected with the offshore wind farm 3 through an offshore confluence bus and the offshore converter valve 4 is connected with the onshore converter valve 6 through the direct-current undersea cable 5; the onshore converter valve 6 is connected with the onshore power grid 8 through the onshore transformer 7;

The offshore converter valve 4 comprises an offshore auxiliary modular multilevel converter valve 9, a first diode valve 10, a second diode valve 11 and a third diode valve 12, wherein a direct-current side of the offshore auxiliary modular multilevel converter valve 9 is connected in parallel with the second diode valve 11, an alternating-current side of the offshore auxiliary modular multilevel converter valve 9 is connected to the offshore confluence bus through a coupling transformer 13, and direct-current sides of the first diode valve 10, the second diode valve 11 and the third diode valve 12 are connected in series, an alternating-current side of the first diode valve 10 is connected to the offshore confluence bus through a first three-winding transformer 14, an alternating-current side of the second diode valve 11 is connected to the offshore confluence bus through a second three-winding transformer 15, an alternating-current side of the third diode valve 12 is connected to the offshore confluence bus through a third three-winding transformer 16, a direct-current positive pole of the first diode valve 10 is connected to the direct-current undersea cable 5 through a first circuit breaker 17, and a side of the first circuit breaker 17 adjacent to the undersea cable is connected to a negative pole of the first diode valve 10 through a first bypass switch 18, a direct-current negative pole of the third diode valve 12 is connected to the direct-current undersea cable 5 through a second circuit breaker 19, and a side of the second circuit break 19 adjacent to the undersea cable is connected to a positive pole of the third diode valve 12 through a second bypass switch 20.

In the offshore wind power direct-current transmission topological circuit based on series-parallel converter valve provided by the embodiments of the present application, in consideration of that the existing offshore converter valve adopts a modular multilevel converter valve containing a plurality of half-bridge sub-modules, which leads to large volume and high cost of the offshore converter valve, the topological circuit in the embodiments of the present application improves the structure of the offshore converter valve. The improved offshore converter valve includes three groups of diode valves and a group of offshore auxiliary MMC, wherein the direct-current sides of three groups of diodes are connected in series, and the offshore auxiliary MMC is connected in parallel with the direct-current side of one of the diode valves, which effectively reduces the volume and cost of the offshore converter valve.

The embodiments of the present application provide an offshore wind power direct-current transmission system based on series-parallel converter valve, which comprises: the aforementioned offshore wind power direct-current transmission topological circuit based on series-parallel converter valve and a control apparatus, wherein the control apparatus is connected with the topological circuit;

The above control apparatus is configured to send closing instructions to the first bypass switch 18 and the second bypass switch 20, acquire an onshore charging voltage of the onshore converter valve 6 and an offshore charging voltage of the offshore converter valve 4 after detecting that the first bypass switch 18 and the second bypass switch 20 have been closed, and send an unlocking power-supplying instruction to the offshore converter valve 4 based on the onshore charging voltage and the offshore charging voltage; wherein the onshore charging voltage and the offshore charging voltage are generated by charging the onshore converter valve 6 and the offshore converter valve 4 with a first working voltage output by the onshore power grid 8 through the onshore transformer 7.

As an example, when the control apparatus detects that the first bypass switch 18 (Bp1) and the second bypass switch 20 (Bp2) are both in a closed state, the control apparatus acquires an onshore charging voltage of the onshore converter valve 6 and an offshore charging voltage of the offshore converter valve 4, and sends an unlocking power-supplying instruction to the offshore converter valve 4 based on the onshore charging voltage of the onshore converter valve 6 and the offshore charging voltage of the offshore converter valve 4, so that the offshore converter valve is unlocked and begins to supply a starting voltage to wind turbines in the offshore wind farm 3.

Specifically, the control apparatus is further configured to detect the onshore charging voltage of the onshore converter valve 6 and the offshore charging voltage of the offshore converter valve 4 in real time, and send the unlocking power-supplying instruction to the offshore converter valve 4 when the onshore charging voltage reaches a first voltage threshold and the offshore charging voltage reaches a second voltage threshold. **In** the embodiments of the present application, the specific contents of the first voltage threshold and the second voltage threshold are not limited, and those skilled in the art can determine them according to actual requirements.

The offshore converter valve 4 is configured to receive the unlocking power-supplying instruction and supply power to wind turbines in the offshore wind farm 3 based on the unlocking power-supplying instruction.

As an example, when the offshore converter valve 4 receives the unlocking power-supplying instruction, it performs the unlocking power-supplying operations, wherein the offshore auxiliary modular multilevel converter valve 9 (offshore auxiliary MMC) provides a grid-connected voltage to the alternating-current side of the offshore wind farm 3 by starting voltage-boosting from zero, so that wind turbines in the offshore wind farm 3 are started.

The control apparatus is further configured to detect the current flowing through the first bypass switch 18 and the current flowing through the second bypass switch 20 when a preset number of wind turbines have been started, and send opening instructions to the first bypass switch 18 and the second bypass switch 20 respectively and send closing instructions to the first circuit breaker 17 and the second circuit breaker 19 respectively when the current flowing through the first bypass switch 18 and the current flowing through the second bypass switch 20 are both zero.

As an example, the preset number can be any number, which can be determined by those skilled in the art according to actual requirements. In the embodiments of the present application, the preset number can be 10% of the total number of wind turbines in the offshore wind farm 3. When a preset number of wind turbines have been started, the generated power gradually rises, and when the current flowing through the first bypass switch 18 (Bp1) and the current flowing through the second bypass switch 20 (Bp2) both gradually decrease to zero, the first bypass switch 18 (Bp1) and the second bypass switch 20 (Bp2) are controlled to be opened; and closing instructions are sent to the first circuit breaker 17 (Brk8) and the second circuit breaker 19 (Brk9) respectively. When the first circuit breaker 17 and the second circuit breaker 19 are closed and the diode valves in the offshore converter valve 4 become conductive after reaching the conduction condition, the offshore wind power direct-current transmission system operates normally.

The offshore wind power direct-current transmission system based on series-parallel converter valve provided by the embodiments of the present application reduces the volume and cost of the offshore converter valve by improving the structure of the offshore converter valve. The improved offshore converter valve includes three groups of diode valves and a group of offshore auxiliary MMC, wherein the direct-current sides of three groups of diodes are connected in series, and the offshore auxiliary MMC is connected in parallel with the direct-current side of one of the diode valves. During a starting process of the system, the onshore converter valve realizes the onshore energy reverse delivery through the first bypass switch and the second bypass switch, thereby completing the black start of the offshore wind farm.

As an optional implementation of the present application, the offshore converter valve further comprises a third circuit breaker 21, a fourth circuit breaker 22, a fifth circuit breaker 23, a sixth circuit breaker 24 and a seventh circuit breaker 25;
Wherein, the alternating-current side of the offshore auxiliary modular multilevel convert valve 9 is connected to the offshore confluence bus through the third circuit break 21, the coupling transformer 13 and the fourth circuit breaker 22 in sequence, the alternating-current side of the first diode valve 10 is connected to the offshore confluence bus through the first three-winding transform 14 and the fifth circuit breaker 23 in sequence, the alternating-current side of the second diode valve 11 is connected to the offshore confluence bus through the second three-winding transformer 15 and the sixth circuit breaker 24 in sequence, and the alternating-current side of the third diode valve 12 is connected to the offshore confluence bus through the third three-winding transformer 16 and the seventh circuit breaker 25 in sequence;
The control apparatus is further configured to send closing instructions to the third circuit breaker 21, the fourth circuit breaker 22, the fifth circuit breaker 23, the sixth circuit breaker 24 and the seventh circuit breaker 25 respectively when detecting that the offshore converter valve 4 has been unlocked, so that the third circuit breaker 21, the fourth circuit breaker 22, the fifth circuit breaker 23, the sixth circuit breaker 24 and the seventh circuit breaker 25 are closed.

As an example, when the control apparatus detects that the offshore converter valve 4 has been unlocked, it sends closing instructions to the third circuit breaker 21 (Brk10), the fourth circuit breaker 22 (Brk11), the fifth circuit breaker 23 (Brk6), the sixth circuit breaker 24 (Brk5) and the seventh circuit breaker 25 (Brk7). After the third circuit breaker 21 (Brk10), the fourth circuit breaker 22 (Brk11), the fifth circuit breaker 23 (Brk6), the sixth circuit breaker 24 (Brk5) and the seventh circuit breaker 25 (Brk7) are closed, the offshore auxiliary modular multilevel converter valve 9 (offshore auxiliary MMC) in the offshore converter valve 4 provides a grid-connected voltage to the alternating-current side of the offshore wind farm 3 through the coupling transformer 13.

As an optional implementation of the present application, when the third circuit breaker 21, the fourth circuit breaker 22, the fifth circuit breaker 23, the sixth circuit breaker 24 and the seventh circuit breaker 25 have been closed, the offshore converter valve is further configured to establish a preset voltage on the offshore confluence bus by starting voltage-boosting from zero, the preset voltage is lower than a rated voltage of the offshore confluence bus, and the preset voltage makes the first diode valve 10, the second diode valve 11 and the third diode valve 12 not conductive, and the preset voltage is higher than a preset grid-connected voltage threshold for offshore wind turbines.

As an example, in the embodiments of the present application, the offshore converter valve 4 is unlocked based on the unlocking power-supplying instruction and then operates in the alternating-current voltage source control mode. The offshore auxiliary MMC in the offshore converter valve provides a grid-connected voltage to the alternating-current side of the offshore wind farm by starting voltage-boosting from zero, and the grid-connected voltage amplitude value is controlled to be a preset voltage, which can be 95% of the rated voltage amplitude value of the offshore confluence bus, so as to ensure that the first diode valve 10, the second diode valve 11 and the third diode valve 12 in the offshore converter valve would not suddenly become conductive at the moment when the fifth circuit breaker 23, the sixth circuit breaker 24 and the seventh circuit breaker 25 become closed. The preset grid-connected voltage threshold can comprise, but is not limited to, 90% of the rated voltage amplitude value of the offshore confluence bus.

As an optional implementation of the present application, the onshore transformer 7 comprises a starting transformer 26, a valve side of the starting transformer 26 is connected to the onshore converter valve 6 through an eighth circuit breaker 27, and a grid side of the starting transformer 26 is connected to the onshore power grid 8 through a ninth circuit breaker 28;
The control apparatus is further configured to send control instructions to the eighth circuit breaker 27 and the ninth circuit breaker 28 respectively, and the control instructions are configured to control the eighth circuit breaker 27 and the ninth circuit breaker 28 to close, wherein after the eighth circuit breaker 27 and the ninth circuit breaker 28 are closed, the onshore power grid 8 outputs the first working voltage through the starting transformer 26, so as to charge the onshore converter valve 6 and the offshore converter valve 4.

As an example, the starting transformer 26 is used in the system starting stage. **In** the embodiments of the present application, after the eighth circuit breaker 27 (Brk4) and the ninth circuit breaker 28 (Brk3) are closed, the onshore power grid 8 outputs the first working voltage through the starting transformer 26, so as to charge the onshore converter valve 6 and the offshore converter valve 4.

As an optional implementation of the present application, the onshore transformer 7 further comprises a steady-state operation transformer 29, a valve side of the steady-state operation transformer 29 is connected to the onshore converter valve 6 through a tenth circuit breaker 30, and a grid side of the steady-state operation transformer 29 is connected to the onshore power grid 8 through an eleventh circuit breaker 31;
The control apparatus is further configured to send opening instructions to the eighth circuit breaker 27 and the ninth circuit breaker 28 respectively and send closing instructions to the tenth circuit breaker 30 and the eleventh circuit breaker 31 when detecting that the first bypass switch 18 and the second bypass switch 20 have been opened; wherein, after the tenth circuit breaker 30 and the eleventh circuit breaker 31 are closed, the onshore power grid 8 outputs a second working voltage through the steady-state operation transformer 29, so as to charge the onshore converter valve 6.

As an example, when it is detected that the first bypass switch 18 (Bp1) and the second bypass switch 20 (Bp2) have been opened, opening instructions are sent to the eighth circuit breaker 27 (Bp4) and the ninth circuit breaker 28 (Bp3) respectively and closing instructions are sent to the tenth circuit breaker 30 (Bp2) and the eleventh circuit breaker 31 (Bp1). After the tenth circuit breaker 30 and the eleventh circuit breaker 31 are closed, the onshore power grid 8 charges the onshore converter valve 6 through the steady-state operation transformer, so that the onshore converter valve 6 can complete uncontrolled charging and become unlocked at the rated voltage, and establish a direct-current-side rated voltage.

As an optional implementation of the present application, the control apparatus is further configured to send an uncontrolled-charging instruction to the onshore converter valve 6 when closed states of the eighth circuit breaker 27 and the ninth circuit breaker 28 are acquired, and obtain a direct-current-side capacitor voltage of the onshore converter valve 6 for sending a controlled-charging instruction to the onshore converter valve 6 based on the capacitor voltage.

As an example, the onshore power grid 8 performs uncontrolled charging to the onshore converter valve 6 through the starting transformer 26. Usually, when the capacitor voltage of the onshore converter valve reaches 30% of its rated voltage, the control apparatus sends a controlled-charging instruction, and the onshore converter valve 6 changes from uncontrolled charging to controlled charging. The onshore converter valve 6 is unlocked after uncontrolled charging is completed, and then controlled charging is performed, wherein a direct-current voltage is established by a control scheme with constant direct-current voltage and constant reactive power, and only a relatively low direct-current voltage (such as 10% of the rated voltage, at this time, the direct-current voltage instruction value is 10% of the rated value, and the reactive power instruction value is zero) is outputted during the process of starting.

As an optional implementation of the present application, the control apparatus is further configured to acquire a rated voltage value of the offshore confluence bus, an alternating-current-side voltage reference value of the offshore converter valve 4 and a current value of the connecting line between the direct-current side of the offshore auxiliary modular multilevel converter valve 9 and the second diode valve 11 when detecting that the first circuit breaker 17 and the second circuit breaker 19 have been closed, and input the rated voltage value of the offshore confluence bus, the alternating-current-side voltage reference value of the offshore converter valve 4 and the current value of the connecting line between the direct-current side of the offshore auxiliary modular multilevel converter valve 9 and the second diode valve 11 into a pre-built voltage control model to obtain a voltage adjustment value for the alternating-current side of the offshore converter valve 4, and send the voltage adjustment value to the offshore converter valve 4 for the offshore converter valve 4 to adjust its alternating-current-side voltage.

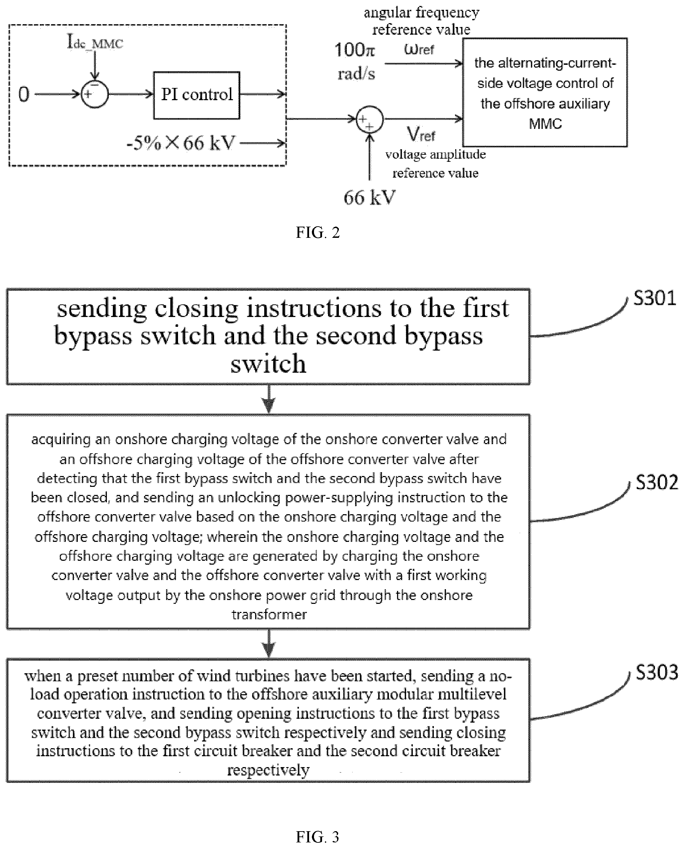

As an example, a pre-built voltage control model is utilized to control the alternating-current-side voltage of the offshore converter valve 4. In the embodiments of the present application, after the first circuit breaker 17 (Brk8) and the second circuit breaker 19 (Brk9) are closed, the voltage on the offshore confluence bus is 95% of the rated voltage, so the diode valves in the offshore converter valve 4 would not become conductive. At this time, according to the rated voltage of the offshore confluence bus, the alternating-current-side voltage reference value of the offshore converter valve 4 and the current value of the connecting line between the direct-current side of the offshore auxiliary modular multilevel converter valve 9 and the second diode valve 11 together with the pre-built voltage control model, a voltage adjustment value for the alternating-current side of the offshore converter valve 4 is obtained and the voltage adjustment value is sent to the offshore converter valve 4 for the offshore converter valve 4 to adjust its alternating-current-side voltage. The control strategy of the pre-built voltage control model is shown in Figure 2, wherein I_{dc_}MMC represents the current value of the connecting line between the offshore auxiliary MMC and the diode valve to which it is connected in parallel; 66kV represents the rated amplitude value of the alternating-current confluence voltage of the offshore wind power farm (66kV in general engineering), ω_{ref} represents the angular frequency reference value, 100π rad/s represents that the angular frequency is controlled to be 100π rad/s, and V_{ref} represents the voltage amplitude reference value; the main purpose of setting -5%×66kV is to set the alternating-current-side voltage amplitude reference value of the offshore auxiliary MMC to 95% of 66kV, and the function of the PI controller is to ensure that the value of I_{dc_}MMC is kept at 0, so that the offshore auxiliary MMC does not need to transmit active power, but only needs to provide reactive power, thus reducing the overall capacity requirement and further saving the cost of the offshore converter valve. Generally, the PI controller consists of a proportional control stage and an integral control stage connected in parallel. Specifically, the PI controller first acquires the difference between I_{dc_}MMC and 0, and then obtains a correction value for the alternating-current-side voltage amplitude reference value of the offshore auxiliary MMC through the processing of the proportional stage and the integral stage, and then adds the correction value to the rated value of 66kV to obtain the final desired alternating-current-side voltage amplitude reference value of the offshore auxiliary MMC.

The working process of the offshore wind power direct-current transmission system based on series-parallel converter valve is explained by a specific exemplary embodiment.

### Exemplary Embodiment:

Step 1: First, switches Bp1 and Bp2 are closed, then switches Brk3 and Brk4 are closed in sequence. The onshore MMC converter valve completes uncontrolled charging and becomes unlocked. The onshore MMC converter valve controls its direct-current-side voltage to be in low-voltage starting mode, and charges the direct-current-side capacitor of the offshore auxiliary MMC.
Step 2: Switches Brk10, Brk11, Brk5, Brk6 and Brk7 are closed, then the offshore auxiliary MMC becomes unlocked and operates in the alternating-current voltage source control mode. The offshore auxiliary MMC provides a grid-connected voltage to the alternating-current side of the offshore wind farm by starting voltage-boosting from zero and the grid-connected voltage amplitude value is controlled at 95% of the rated voltage, so as to ensure that the offshore diode converter valves would not suddenly become conductive at the moment when Brk8 and Brk9 become closed subsequently.
Step 3: After the wind turbines in the offshore wind farm detects that the grid-connected voltage reaches 95% of the rated value, they gradually start to generate electricity, and the generated power gradually rises. When the currents flowing through Bp1 and Bp2 both gradually decrease and reach zero, switches Bp1 and Bp2 are opened, and the generated power of the offshore wind turbines is controlled to remain constant.
Step 4: Brk4 and Brk3 are opened in sequence, and then Brk1 and Brk2 are closed. The onshore MMC converter valve completes uncontrolled charging and becomes unlocked at the rated voltage, and establishes its direct-current-side rated voltage.
Step 5: Switches Brk8 and Brk9 are closed. The grid-connected voltage of the offshore wind farm is 95% of the rated value at this time, so the diode valves of the offshore converter valve would not become conductive. At this time, the alternating-current-side voltage amplitude reference value of the offshore auxiliary MMC is switched to the controlled reference value, and the specific control strategy thereof is shown in Figure 2. Then, the generated power of the offshore wind farm is no longer limited, and the offshore wind turbines operate in the maximum power point tracking (MPPT) mode, so that the whole offshore wind power direct-current transmission system operate normally.

The embodiments of the present application also disclose a starting method for an offshore wind power direct-current transmission system based on series-parallel converter valve, which is applied by the offshore wind power direct-current transmission system based on series-parallel converter valve in the above embodiments, and as shown in Figure 3, the above method comprises:
Step S301: sending closing instructions to the first bypass switch and the second bypass switch.

Specifically, the unlocking power-supplying instruction is sent to the offshore converter valve when the onshore charging voltage reaches a first voltage threshold and the offshore charging voltage reaches a second voltage threshold.

Step S302: acquiring an onshore charging voltage of the onshore converter valve and an offshore charging voltage of the offshore converter valve after detecting that the first bypass switch and the second bypass switch have been closed, and sending an unlocking power-supplying instruction to the offshore converter valve based on the onshore charging voltage and the offshore charging voltage; wherein the onshore charging voltage and the offshore charging voltage are generated by charging the onshore converter valve and the offshore converter valve with a first working voltage output by the onshore power grid through the onshore transformer. As an example, referring specifically to the description of the relevant parts in the embodiment shown in Figure 1, which will not be repeated herein.

Step S303: when a preset number of wind turbines have been started, sending a no-load operation instruction to the offshore auxiliary modular multilevel converter valve, and sending opening instructions to the first bypass switch and the second bypass switch respectively and sending closing instructions to the first circuit breaker and the second circuit breaker respectively. As an example, referring specifically to the description of the relevant parts in the embodiment shown in Figure 1, which will not be repeated herein.

The present application provides a starting method for an offshore wind power direct-current transmission system based on series-parallel converter valve. During the process of starting, the onshore converter valve is controlled to realize the onshore energy reverse delivery through the first bypass switch and the second bypass switch, thereby completing the black start of the offshore wind farm.

As an optional embodiment of the present application, the method further comprises:
Sending closing instructions to the third circuit breaker, the fourth circuit breaker, the fifth circuit breaker, the sixth circuit breaker and the seventh circuit breaker respectively when detecting that the offshore converter valve has been unlocked, so that the third circuit breaker, the fourth circuit breaker, the fifth circuit breaker, the sixth circuit breaker and the seventh circuit breaker are closed.

As an optional embodiment of the present application, the method further comprises:
Sending control instructions to the eighth circuit breaker and the ninth circuit breaker respectively, and the control instructions are configured to control the eighth circuit breaker and the ninth circuit breaker to close, wherein after the eighth circuit breaker and the ninth circuit breaker are closed, the onshore power grid outputs the first working voltage through the starting transformer, so as to charge the onshore converter valve and the offshore converter valve.

As an optional embodiment of the present application, the method further comprises:
Sending opening instructions to the eighth circuit breaker and the ninth circuit breaker respectively and sending closing instructions to the tenth circuit breaker and the eleventh circuit breaker when detecting that the first bypass switch and the second bypass switch have been opened; wherein, after the tenth circuit breaker and the eleventh circuit breaker are closed, the onshore power grid outputs a second working voltage through the steady-state operation transformer, so as to charge the onshore converter valve.

As an optional embodiment of the present application, the method further comprises:
Sending an uncontrolled-charging instruction to the onshore converter valve when closed states of the eighth circuit breaker and the ninth circuit breaker are acquired, and obtaining a direct-current-side capacitor voltage of the onshore converter valve for sending a controlled-charging instruction to the onshore converter valve based on the capacitor voltage.

As an optional embodiment of the present application, the method further comprises:
Acquiring a rated voltage value of the offshore confluence bus, an alternating-current-side voltage reference value of the offshore converter valve and a current value of the connecting line between the direct-current side of the offshore auxiliary modular multilevel converter valve and the second diode valve when detecting that the first circuit breaker and the second circuit breaker have been closed, and inputting the rated voltage value of the offshore confluence bus, the alternating-current-side voltage reference value of the offshore converter valve and the current value of the connecting line between the direct-current side of the offshore auxiliary modular multilevel converter valve and the second diode valve into a pre-built voltage control model to obtain a voltage adjustment value for the alternating-current side of the offshore converter valve, and sending the voltage adjustment value to the offshore converter valve for the offshore converter valve to adjust its alternating-current-side voltage.

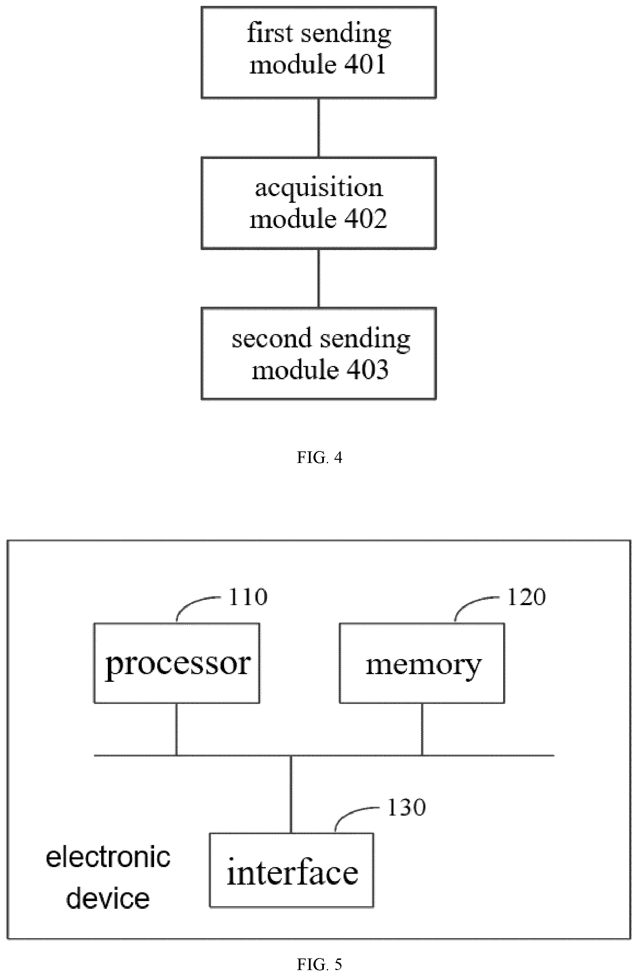

The embodiments of the present application also disclose a starting apparatus for an offshore wind power direct-current transmission system based on series-parallel converter valve, which is used by the offshore wind power direct-current transmission system based on series-parallel converter valve in the above embodiments, and as shown in Figure 4, the apparatus comprises:
A first sending module 401, configured to send closing instructions to the first bypass switch and the second bypass switch. Please refer specifically to the description of the relevant parts in the embodiment shown in Figure 3, which will not be repeated herein.

An acquisition module 402, configured to acquire an onshore charging voltage of the onshore converter valve and an offshore charging voltage of the offshore converter valve after detecting that the first bypass switch and the second bypass switch have been closed, and send an unlocking power-supplying instruction to the offshore converter valve based on the onshore charging voltage and the offshore charging voltage; wherein the onshore charging voltage and the offshore charging voltage are generated by charging the onshore converter valve and the offshore converter valve with a first working voltage output by the onshore power grid through the onshore transformer. Please refer specifically to the description of the relevant parts in the embodiment shown in Figure 3, which will not be repeated herein.

A second sending module 403, configured to, when a preset number of wind turbines have been started, send a no-load operation instruction to the offshore auxiliary modular multilevel converter valve, and send opening instructions to the first bypass switch and the second bypass switch respectively and send closing instructions to the first circuit breaker and the second circuit breaker respectively. Please refer specifically to the description of the relevant parts in the embodiment shown in Figure 3, which will not be repeated herein.

In addition, the embodiment of the present application further provides an electronic device, as shown in Figure 5, the electronic equipment can comprise a processor 110 and a memory 120, wherein the processor 110 and the memory 120 can be interconnected by a bus or other means, and the connection by a bus is taken as an example in Figure 5. In addition, the electronic equipment also includes at least one interface 130, the at least one interface 130 can be a communication interface or other interfaces, which is not limited in this embodiment.

Wherein, the processor 110 can be a central processing unit (CPU). The processor 110 can also be other general-purpose processors, digital signal processor (DSP), application specific integrated circuit (ASIC), field-programmable gate array (FPGA) or other programmable logic devices, discrete gates or transistor logic devices, discrete hardware components and other chips, or a combination of the above types of chips.

As a non-transitory computer-readable storage medium, the memory 120 can be used to store non-transitory software programs, non-transitory computer-executable programs and modules, such as program instructions/modules corresponding to the starting method in the embodiments of the present application. The processor 110 executes various functional applications and data processing of the processor by running non-transitory software programs, instructions and modules stored in the memory 120, that is, the starting method for an offshore wind power direct-current transmission system based on series-parallel converter valve in the above method embodiments is realized.

The memory 120 can include a program storage area and a data storage area, wherein the program storage area can store an operating system and an application program required by at least one function; the data storage area can store data generated by the processor 110 and the like. In addition, the memory 120 can include high-speed random access memory and can also include non-transitory memory, for example, at least one disk memory device, flash memory device, or other non-transitory solid-state memory devices. In some embodiments, the memory 120 can optionally include memories which are set remotely with respect to the processor 110, and these remote memories can be connected to the processor 110 through a network. Examples of the above network include, but are not limited to, the Internet, an intranet, a local area network, a mobile communication network, and combinations thereof.

In addition, the at least one interface 130 is configured for communication between the electronic device and external devices, for example, communication with a server and the like. Optionally, the at least one interface 130 can also be configured to connect peripheral input and output devices, for example, a keyboard, a display screen and the like.

One or more modules are stored in the memory 120, and when the one or more modules are executed by the processor 110, the starting method for an offshore wind power direct-current transmission system based on series-parallel converter valve in the embodiment shown in Figure 3 is performed.

The specific details of the above electronic device can be understood by referring to the corresponding related descriptions and effects in the embodiment shown in Figure 3, which will not be repeated herein.

It can be understood by those skilled in the art that all or part of the processes in the methods of the above embodiments can be completed by instructing related hardware by means of a computer program, the program can be stored in a computer-readable storage medium, and when the program is executed, the processes of the embodiments of the above methods can be included. Wherein, the storage medium can be a magnetic disk, an optical disk, a read-only memory (ROM), a random access memory (RAM), a flash memory, a hard disk drive (HDD) or a solid-state drive (SSD) and the like; the storage medium can also include a combination of the above kinds of memories.

Apparently, the above embodiments are only examples for clear explanation, and are not a limitation to the implementation ways. For those of ordinary skill in the art, other changes or modifies in different forms can be made on the basis of the above explanation. It is not necessary and impossible to exhaustively list all the embodiments herein. However, any obvious changes or modifications derived from this are still within the scope of protection of the present application.

## Claims

1. An offshore wind power direct-current transmission topological circuit based on series-parallel converter valve, **characterized in** comprising:
an offshore wind farm, an offshore converter valve, a direct-current undersea cable, an onshore converter valve, an onshore transformer and an onshore power grid; wherein
the offshore converter valve is connected with the offshore wind farm through an offshore confluence bus and the offshore converter valve is connected with the onshore converter valve through the direct-current undersea cable; the onshore converter valve is connected with the onshore power grid through the onshore transformer;
the offshore converter valve comprises an offshore auxiliary modular multilevel converter valve, a first diode valve, a second diode valve and a third diode valve, wherein a direct-current side of the offshore auxiliary modular multilevel converter valve is connected in parallel with the second diode valve, an alternating-current side of the offshore auxiliary modular multilevel converter valve is connected to the offshore confluence bus through a coupling transformer, and direct-current sides of the first diode valve, the second diode valve and the third diode valve are connected in series, an alternating-current side of the first diode valve is connected to the offshore confluence bus through a first three-winding transformer, an alternating-current side of the second diode valve is connected to the offshore confluence bus through a second three-winding transformer, an alternating-current side of the third diode valve is connected to the offshore confluence bus through a third three-winding transformer, a direct-current positive pole of the first diode valve is connected to the direct-current undersea cable through a first circuit breaker, and a side of the first circuit breaker adjacent to the undersea cable is connected to a negative pole of the first diode valve through a first bypass switch, a direct-current negative pole of the third diode valve is connected to the direct-current undersea cable through a second circuit breaker, and a side of the second circuit break adjacent to the undersea cable is connected to a positive pole of the third diode valve through a second bypass switch.

2. An offshore wind power direct-current transmission system based on series-parallel converter valve, **characterized in** comprising: the offshore wind power direct-current transmission topological circuit based on series-parallel converter valve according to claim 1 and a control apparatus, wherein the control apparatus is connected with the topological circuit;
the control apparatus is configured to send closing instructions to the first bypass switch and the second bypass switch, acquire an onshore charging voltage of the onshore converter valve and an offshore charging voltage of the offshore converter valve after detecting that the first bypass switch and the second bypass switch have been closed, and send an unlocking power-supplying instruction to the offshore converter valve based on the onshore charging voltage and the offshore charging voltage; wherein the onshore charging voltage and the offshore charging voltage are generated by charging the onshore converter valve and the offshore converter valve with a first working voltage output by the onshore power grid through the onshore transformer;
the offshore converter valve is configured to receive the unlocking power-supplying instruction and supply power to wind turbines in the offshore wind farm based on the unlocking power-supplying instruction;
the control apparatus is further configured to detect the current flowing through the first bypass switch and the current flowing through the second bypass switch when a preset number of wind turbines have been started, and send opening instructions to the first bypass switch and the second bypass switch respectively and send closing instructions to the first circuit breaker and the second circuit breaker respectively when the current flowing through the first bypass switch and the current flowing through the second bypass switch are both zero.

3. The offshore wind power direct-current transmission system based on series-parallel converter valve according to claim 2, **characterized in that** the offshore converter valve further comprises a third circuit breaker, a fourth circuit breaker, a fifth circuit breaker, a sixth circuit breaker and a seventh circuit breaker;
wherein, the alternating-current side of the offshore auxiliary modular multilevel convert valve is connected to the offshore confluence bus through the third circuit break, the coupling transformer and the fourth circuit breaker in sequence, the alternating-current side of the first diode valve is connected to the offshore confluence bus through the first three-winding transform and the fifth circuit breaker in sequence, the alternating-current side of the second diode valve is connected to the offshore confluence bus through the second three-winding transformer and the sixth circuit breaker in sequence, and the alternating-current side of the third diode valve is connected to the offshore confluence bus through the third three-winding transformer and the seventh circuit breaker in sequence;
the control apparatus is further configured to send closing instructions to the third circuit breaker, the fourth circuit breaker, the fifth circuit breaker, the sixth circuit breaker and the seventh circuit breaker respectively when detecting that the offshore converter valve has been unlocked, so that the third circuit breaker, the fourth circuit breaker, the fifth circuit breaker, the sixth circuit breaker and the seventh circuit breaker are closed.

4. The offshore wind power direct-current transmission system based on series-parallel converter valve according to claim 3, **characterized in that**, when the third circuit breaker, the fourth circuit breaker, the fifth circuit breaker, the sixth circuit breaker and the seventh circuit breaker have been closed, the offshore converter valve is further configured to establish a preset voltage on the offshore confluence bus by starting voltage-boosting from zero, the preset voltage is lower than a rated voltage of the offshore confluence bus, and the preset voltage makes the first diode valve, the second diode valve and the third diode valve not conductive, and the preset voltage is higher than a preset grid-connected voltage threshold for offshore wind turbines.

5. The offshore wind power direct-current transmission system based on series-parallel converter valve according to claim 2, **characterized in that** the onshore transformer comprises a starting transformer, a valve side of the starting transformer is connected to the onshore converter valve through an eighth circuit breaker, and a grid side of the starting transformer is connected to the onshore power grid through a ninth circuit breaker;
the control apparatus is further configured to send control instructions to the eighth circuit breaker and the ninth circuit breaker respectively, and the control instructions are configured to control the eighth circuit breaker and the ninth circuit breaker to close, wherein after the eighth circuit breaker and the ninth circuit breaker are closed, the onshore power grid outputs the first working voltage through the starting transformer, so as to charge the onshore converter valve and the offshore converter valve.

6. The offshore wind power direct-current transmission system based on series-parallel converter valve according to claim 5, **characterized in that** the onshore transformer further comprises a steady-state operation transformer, a valve side of the steady-state operation transformer is connected to the onshore converter valve through a tenth circuit breaker, and a grid side of the steady-state operation transformer is connected to the onshore power grid through an eleventh circuit breaker;
the control apparatus is further configured to send opening instructions to the eighth circuit breaker and the ninth circuit breaker respectively and send closing instructions to the tenth circuit breaker and the eleventh circuit breaker when detecting that the first bypass switch and the second bypass switch have been opened; wherein, after the tenth circuit breaker and the eleventh circuit breaker are closed, the onshore power grid outputs a second working voltage through the steady-state operation transformer, so as to charge the onshore converter valve.

7. The offshore wind power direct-current transmission system based on series-parallel converter valve according to claim 2, **characterized in that** the control apparatus is further configured to detect the onshore charging voltage of the onshore converter valve and the offshore charging voltage of the offshore converter valve in real time, and send the unlocking power-supplying instruction to the offshore converter valve when the onshore charging voltage reaches a first voltage threshold and the offshore charging voltage reaches a second voltage threshold.

8. The offshore wind power direct-current transmission system based on series-parallel converter valve according to claim 5, **characterized in that** the control apparatus is further configured to send an uncontrolled-charging instruction to the onshore converter valve when closed states of the eighth circuit breaker and the ninth circuit breaker are acquired, and obtain a direct-current-side capacitor voltage of the onshore converter valve for sending a controlled-charging instruction to the onshore converter valve based on the capacitor voltage.

9. The offshore wind power direct-current transmission system based on series-parallel converter valve according to claim 2, **characterized in that** the control apparatus is further configured to acquire a rated voltage value of the offshore confluence bus, an alternating-current-side voltage reference value of the offshore converter valve and a current value of the connecting line between the direct-current side of the offshore auxiliary modular multilevel converter valve and the second diode valve when detecting that the first circuit breaker and the second circuit breaker have been closed, and input the rated voltage value of the offshore confluence bus, the alternating-current-side voltage reference value of the offshore converter valve and the current value of the connecting line between the direct-current side of the offshore auxiliary modular multilevel converter valve and the second diode valve into a pre-built voltage control model to obtain a voltage adjustment value for the alternating-current side of the offshore converter valve, and send the voltage adjustment value to the offshore converter valve for the offshore converter valve to adjust its alternating-current-side voltage.

10. A starting method for an offshore wind power direct-current transmission system based on series-parallel converter valve, **characterized in that**, the method is applied by the offshore wind power direct-current transmission system based on series-parallel converter valve according to any one of claims 2 to 9, and the method comprises:
sending closing instructions to the first bypass switch and the second bypass switch;
acquiring an onshore charging voltage of the onshore converter valve and an offshore charging voltage of the offshore converter valve after detecting that the first bypass switch and the second bypass switch have been closed, and sending an unlocking power-supplying instruction to the offshore converter valve based on the onshore charging voltage and the offshore charging voltage; wherein the onshore charging voltage and the offshore charging voltage are generated by charging the onshore converter valve and the offshore converter valve with a first working voltage output by the onshore power grid through the onshore transformer;
when a preset number of wind turbines have been started, sending a no-load operation instruction to the offshore auxiliary modular multilevel converter valve, and sending opening instructions to the first bypass switch and the second bypass switch respectively and sending closing instructions to the first circuit breaker and the second circuit breaker respectively.

11. A starting apparatus for an offshore wind power direct-current transmission system based on series-parallel converter valve, **characterized in that**, the apparatus is used by the offshore wind power direct-current transmission system based on series-parallel converter valve according to any one of claims 2 to 9, and the apparatus comprises:
a first sending module, configured to send closing instructions to the first bypass switch and the second bypass switch;
an acquisition module, configured to acquire an onshore charging voltage of the onshore converter valve and an offshore charging voltage of the offshore converter valve after detecting that the first bypass switch and the second bypass switch have been closed, and send an unlocking power-supplying instruction to the offshore converter valve based on the onshore charging voltage and the offshore charging voltage; wherein the onshore charging voltage and the offshore charging voltage are generated by charging the onshore converter valve and the offshore converter valve with a first working voltage output by the onshore power grid through the onshore transformer;
a second sending module, configured to, when a preset number of wind turbines have been started, send a no-load operation instruction to the offshore auxiliary modular multilevel converter valve, and send opening instructions to the first bypass switch and the second bypass switch respectively and send closing instructions to the first circuit breaker and the second circuit breaker respectively.
